# EUROPEAN PATENT SPECIFICATION

(11) **EP 3 544 370 B1**
(45) Date of publication and mention of the grant of the patent: **11.10.2023**
(21) Application number: 18163037.7
(22) Date of filing: 21.03.2018
(51) Int. Cl.: H04W 88/06, H04L 1/00, H04W 28/08, H04L 47/10

(54) **DELIVERING CONTENT OVER MULIPLE DIFFERENT NETWORKS USING DIFFERENT TRANSMISSION MODES**
BEREITSTELLUNG VON INHALT MITTELS MEHRERER NETZWERKE MIT VERSCHIEDENEN ÜBERTRAGUNGSMODI
FOURNITURE DE CONTENU AUX MOYEN DE MULTIPLES RESEAUX UTILISANT DES MODES DE TRANSMISSION DIFFÉRENTS

(43) Date of publication of application: 25.09.2019
(73) Proprietor: Nokia Technologies Oy, 02610 Espoo (FI)
(72) Inventor: KUCERA, Stepan, Dublin 15 (IE); MULLANY, Francis, Dublin 15 (IE)
(74) Representative: Bryers LLP

(56) References cited:
- EP-A1- 3 160 097
- WO-A2-2008/006013
- US-A1- 2009 201 805
- US-A1- 2011 002 246
- Qualcomm ET AL: "Qualcomm Perspective on Next Generation Television", , 1 January 2015 (2015-01-01), XP055316472, Retrieved from the Internet: URL:http://www.cambridgewireless.co.uk/Pre sentation/CWTEC2015KentWalker.pdf [retrieved on 2016-11-04]
- JAEHYEON BAE (SAMSUNG) ET AL: "[MMT-IG] Usage of MRI and CR message for dynamic media resource allocation", 116. MPEG MEETING; 20161014 - 20161021; CHENGDU; (MOTION PICTURE EXPERT GROUP OR ISO/IEC JTC1/SC29/WG11), , no. m39360 14 October 2016 (2016-10-14), XP030067706, Retrieved from the Internet: URL:http://phenix.int-evry.fr/mpeg/doc_end _user/documents/116_Chengdu/wg11/m39360-v2 -m39360_r1.zip [retrieved on 2016-10-14]

## Description

### TECHNICAL FIELD

Aspects relate, in general, to a method and system for delivery content in a content delivery platform.

### BACKGROUND

Content can be delivered to end users over unicast or multicast transmissions. Multicast can be scaled in a cost-effective manner compared to unicast. However, an end-user should be connected such that a minimum data rate can be observed, and re-transmissions of lost/delayed content due to any unaccounted multicast link variations are fundamentally difficult due to the unidirectional nature of multicast data delivery.

EP 3 160 097 A1 discloses methods and apparatus to transmit source data over multicast network and unicast push and pull repair data over broadband network. Several source packets are gathered in source packets blocks, several repair packets are generated from the source packet block, and then source packets are transmitted over broadband, unicast network whereas repair packets are transmitted over broadcast network.

US 2009/201805 A1 discloses the generation of FEC packets from multiple source packets. Then all the source packets can be transmitted over a source media path and all the FEC packets can be transmitted over a separate FEC media path, or different subsets of source and FEC packets can be transmitted over different media paths. The media path can rely on different network technologies such as cable modem and DSL lines.

US 2011/002246 A1 discloses sending the same encoded transport block on two different Radio Access Technologies, RAT, or sending the same transport block on the two RATs using different encoding, or sending different transport blocks on two RATs using the same or different channel coding.

Qualcomm ET Al: "Qualcomm Perspective on Next Generation Television", 1 January 2015 (2015-01-01), XP055316472 discloses dynamic adaptive streaming over HTTP (DASH) and the XML based service and signalling structure available from 3GPP eMBMS.

Jaehyeon Bae (Samsung) ET AL: "[MMT-IG] Usage of MRI and CR message for dynamic media resource allocation", 116. MPEG Meeting; 20161014 - 20161021; Chengdu; (Motion Picture Expert Group or ISO/IEC JTCI/SC29/WGII), no. m39360 discloses usage of MRI and CR messaging for dynamic media resource allocation.

WO 2008/006013 A2 discloses a data transmitter determining a strategy for incorporating a combination of multicast and unicast transmissions depending on the pattern of error messages from the receivers. The data transmitter analyses errors from multiple receivers, computes the corresponding FEC, and multicasts the FEC to the receivers. For receivers having a number of errors greater than the multicast number of FEC portions, unicast FEC is transmitted.

### SUMMARY

Independent claim 1 defines a method according to the invention. Independent claim 7 defines a corresponding content server according to the invention. Independent claim 10 defines a corresponding non-transitory machine-readable storage medium according to the invention. Independent claim 12 defines a corresponding content delivery system comprising means according to the invention. Preferred embodiments are defined in the dependent claims.

According to a claimed embodiment, there is provided a method, in a content delivery platform, for delivering a content segment comprising K source units, the method comprising generating N encoded units formed from respective ones of the K source units of the content segment, transmitting M encoded units of the content segment using a first data delivery mode of the content delivery platform, and transmitting Q encoded units of the content segment using a second data delivery mode of the content delivery platform, wherein the first data delivery mode is a multicast data delivery mode, and wherein the second data delivery mode is a unicast data delivery mode, and wherein the configuration and performance of the multicast data delivery mode is used to control a link send rate parameter of the unicast data delivery mode. The first and second data delivery modes of the content delivery platform can be hosted by at least one data communication network. The first data delivery mode of the content delivery platform can be hosted by a first data communication network, and the second data delivery mode of the content delivery platform can be hosted by a second data communication network. Transmission of the M and/or Q encoded units can be supplemented using the first or second delivery modes with transmission of encoded or source units. At least (K-M-Q) source units of the content segment can be transmitted using the first and/or second data delivery mode of the content delivery platform. At least a portion of the N encoded units can be weighted random linear combinations of the K source units or can be generated using any one of repetition; random linear codes; rateless codes; Reed-Solomon codes; parity codes; fountain codes; LPDC codes and Hamming codes.

According to a claimed embodiment, there is provided a content server in a content delivery platform, the content server configured to generate multiple encoded units using respective source units of a content segment for delivery using the platform, transmit at least a portion of the multiple encoded units of the content segment using a first data delivery mode of the content delivery platform, and transmit at least a portion of the multiple encoded units of the content segment using a second data delivery mode of the content delivery platform, wherein the first data delivery mode is a multicast data delivery mode, and wherein the second data delivery mode is a unicast data delivery mode, and wherein the configuration and performance of the multicast data delivery mode is used to control a link send rate parameter of the unicast data delivery mode. The first data delivery mode can be a multicast data delivery mode. The second data delivery mode can be a unicast data delivery mode. The first data delivery mode can be hosted by a first data communications network. The second data delivery mode can be hosted by a first or second data communications network.

According to a claimed embodiment, there is provided a non-transitory machine-readable storage medium encoded with instructions executable by a processor for delivering content in a content delivery platform, the machine-readable storage medium comprising instructions to generate N encoded units formed from respective ones of the K source units of the content segment, where N ≥ K, transmit M encoded units of the content segment using a first data delivery mode of the content delivery platform, and transmit Q encoded units of the content segment using a second data delivery mode of the content delivery platform, wherein the first data delivery mode is a multicast data delivery mode, and wherein the second data delivery mode is a unicast data delivery mode, and wherein the configuration and performance of the multicast data delivery mode is used to control a link send rate parameter of the unicast data delivery mode. The non-transitory machine-readable storage medium can be further encoded with instructions to transmit M encoded units of the content segment over a first data communication network, where 0 ≤ M ≤ (K + Δ), and Δ > 0, whereby to cover for losses and/or decoding inefficiencies, and transmit Q encoded units of the content segment over the first or a second data communication network, where Q ≤ (K + Δ).

According to a claimed embodiment, there is provided a content delivery system, the system comprising means to encode a plurality of source units of a content segment to generate encoded units for delivery to an end user, means to transmit at least a portion of the encoded units over a first delivery mode of the system in a first data communication network, and means to transmit at least a portion of the encoded units over a second delivery mode of the system in the first or a second data communication network. The first data delivery mode is a multicast data delivery mode, and the second data delivery mode is a unicast data delivery mode. The configuration and performance of the multicast data delivery mode is used to control a link send rate parameter of the unicast data delivery mode. The number of encoded units can be at least the same as the number of source units.

### BRIEF DESCRIPTION OF THE DRAWINGS

Embodiments will now be described, by way of example only, with reference to the accompanying drawings, in which:
Figure 1 is a flowchart of a method according to an example;
Figure 2 is a schematic representation of a content delivery system according to an example;
Figure 3 is a schematic representation of the formation of encoded units according to an example;
Figure 4 is a schematic representation of the recovery of source units from a combination of source units and encoded units according to an example;
Figures 5 and 6 are schematic representations of content delivery platforms according to examples; and
Figure 7 shows an example of a processor associated with a memory according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Data can be delivered to an end user (user equipment or terminals) in a number of ways. For example, multimedia content can be delivered over unicast, which is a one-to-one transmission from one point in a network (source) to another point (destination), or multicast in which a group transmission is delivered from the source to a group of destination terminals simultaneously.

Unicast technologies can use adaptive bitrate streaming (eg, HTTP-based standards such as HLS and MPEG DASH) and so can deliver multimedia content to mobile (for example) end users even over time-varying wireless channels. However, if millions of users simultaneously watched a live event for example, the peak in video consumption would require a significantly large investment for an operator using a traditional unicast delivery method, where each viewer counts as a unique unicast session.

Multicast addresses the unicast scalability problem, but the end user must be connected such that a minimum data delivery rate is guaranteed at any given time, otherwise, the fixed-rate multicast service cannot operate. Also, re-transmissions of lost/delayed content due to any unaccounted multicast link variations are fundamentally difficult due to the unidirectional nature of multicast data delivery.

According to an example, there is provided a method for content delivery that combines data delivery modes. In an example, data transmitted using one data delivery modecan be supplemented by data delivered using another data delivery mode. For example, data transmitted using a multicast delivery mode can be supplemented by data delivered using a unicast delivery mode of data transmission in order to augment any shortfall in multicast capacity.

In example, respective delivery modes can be hosted by different data communication networks. For example, a multicast transmission can use a wireline DSL network, and a unicast transmission can use a telecommunications network, such as LTE for example. In an another example, delivery modes can be hosted using the same data communication network. For example, a wireline DSK network can host a first data delivery mode at a first data rate, and a second data delivery mode at a second data rate.

According to an example, the integration of data delivery modes can be based on the use of rateless (or fountain) coding in which an end user can ignore the association between a data delivery path as well as transmission/reception order of individual content segments. Consequently, the concept of rate adaptation and re-transmissions is also made redundant. Thus, for example, seamless unicast and multicast integration is possible.

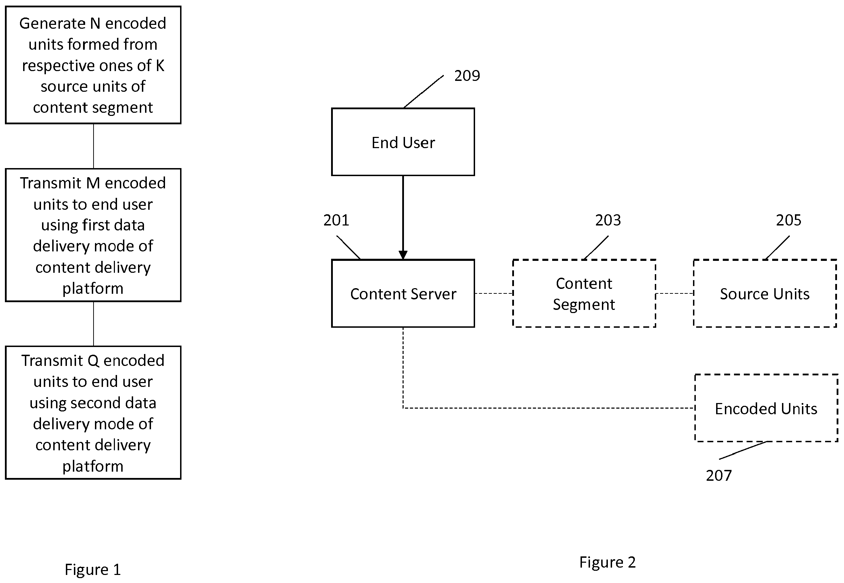

Figure 1 is a flowchart of a method according to an example. In block 101, a server (for example) in a content delivery platform for delivering a content segment comprising multiple (K) source units to an end user generates N encoded units formed from respective ones of the K source units of the content segment. The encoded units can be weighted random linear combinations of the source units. Other examples of ways in which the encoded units can be generated include using repetition; random linear codes; rateless codes; reed-solomon codes; parity codes; fountain codes; LPDC codes and hamming codes.

In block 103, M of the encoded units of the content segment are transmitted to the end user using a first data delivery mode of the content delivery platform. In block 105 Q of the encoded units of the content segment are transmitted to the end user using a second data delivery mode of the content delivery platform.

In an example, encoded units can comprise replicas of source units so that unencoded and encoded units of the content segment are transmitted using respective different data delivery modes of the content delivery platform.

Figure 2 is a schematic representation of a content delivery system according to an example. A content server 201 can create a content segment 203 of multimedia content consisting of K source units 205. In an example, each source unit can be duration/size-wise smaller than a maximum buffering delay/size or other system constraint. From the K source units, the server can generate N encoded units 207. Whenever an end-user (receiver, user equipment) 209 requests the content segment 203, the server can transmit encoded and/or source units to the user equipment using multiple paths. In an example, at least one of the multiple paths is of a multicast nature. In order to minimize data delivery latency and overhead the server 201 can ensure that each path delivers new non-deducible information to the receiver 209 (that is, the transmitted encoded and/or source units are independent), and that the configuration and performance of the multicast data delivery is used to control unicast parameters such as content type, unit type and link send rate. So, for example, unicast can be used to supplement missing multicast capacity for given content.

The user equipment 209 can recover the K source units from the received encoded and/or non-encoded data. For example, Gaussian elimination of at least K received encoded / source units can be used.

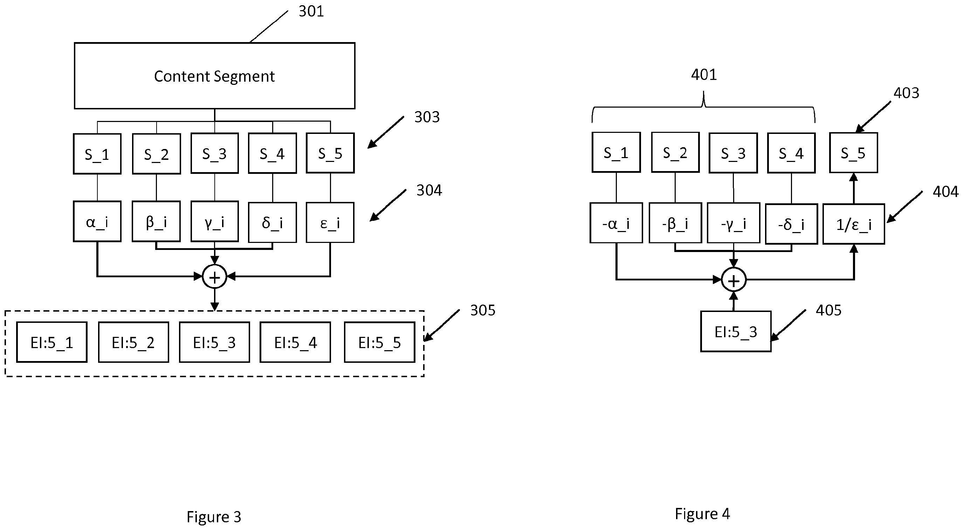

Figure 3 is a schematic representation of the formation of encoded units according to an example. A content segment 301 comprises multiple source units 303, S_1, ..., S_5. Multiple (at least five in the example of figure 3) alternative encoded units 305, E1:5_i are generated by multiplying the five source units S_1, ..., S_5 with five random coefficients, 304, α_i, β_i, γ_i, δ_i, ε_i, generated individually for each index "i", and summing the products together, thereby forming at least five weighted random linear combinations of the source units. In an example, the multiplicative weights for source unit combining are selected at random in an identical, independent, uniform manner.

Thus, in the example, of figure 3, a content segment 301, consisting of five source units S_1, ..., S_5, is transformed into an encoded frame [E1:5_1, E1:5_2, ..., E1:5_N] where the upper-bound "N" on the index "i" is theoretically unlimited. Any of the encoded units E1:5_i carries information equivalent to one of the non-encoded source units S_1 to S_5. Hence, to preserve the source information, N ≥ 5.

In an example, video content can be delivered to an end user by sending encoded and/or non-encoded units over an arbitrary combination of delivery modes, such as multicast and unicast sessions. Referring to the example of figure 3, in which a content segment comprises five source units, the end user must receive at least five units of either type (i.e., S_i or E1:5_i) over any path in order to be able to recover the original information [S_I, ... , S_5].

This recovery can be performed using Gaussian elimination based on the knowledge of multipliers α_i, β_i, γ_i, δ_i, ε_i for each encoded segment, as shown in figure 4, which is a schematic representation of the recovery of source units from a combination of source units and encoded units according to an example. More specifically, an end user receives four source units 401 and one encoded unit 405. The multipliers 404 can be used to recover the missing source unit 403.

In an example, the source units can be selected such that their size (duration) do not exceed the maximum configured buffer size (permissible buffer delay) or other similar system constraint.

To minimize delivery time and capacity overhead, the content server can send units that are linearly independent not only within the context of each path (delivery mode) but also within the entire multi-path session (that is, across all paths). In the example of figure 3, the minimum for successful data decoding, conditioned by full rank of the system matrix, is five received units of any type. Additional one or more units of either type must be added to the system in case of linear dependence among received segments. However, it is irrelevant what segments are sent over what path and in what order they arrive.

Multiple strategies for ensuring linear independence of transmitted segments are possible. For example:
- A content distributor can multicast five encoded units E1:5_i for arbitrary "i" (say "i=1:5") for each video frame over a DSL network. Viewers whose multicast session was unable to deliver all of these five encoded units for each content segment can then individually request supplemental encoded units by using unicast over a nearby LTE macro cell for example. The unicast indices "i" can be chosen so as not to overlap with those of multicast segments, i.e. "i>5" for all unicast segments delivered over LTE.
- The multicast session can deliver non-encoded units S_1 to S_5 to support full content delivery to users who are not using the proposed scheme to ensure backward compatibility. The unicast session can then deliver encoded units. For example, one encoded unit E1:5 i can be delivered over unicast for each non-encoded unit S_j missing in the multicast. Both "i" and "j" can be arbitrary as non-encoded and encoded units are by default linearly independent.

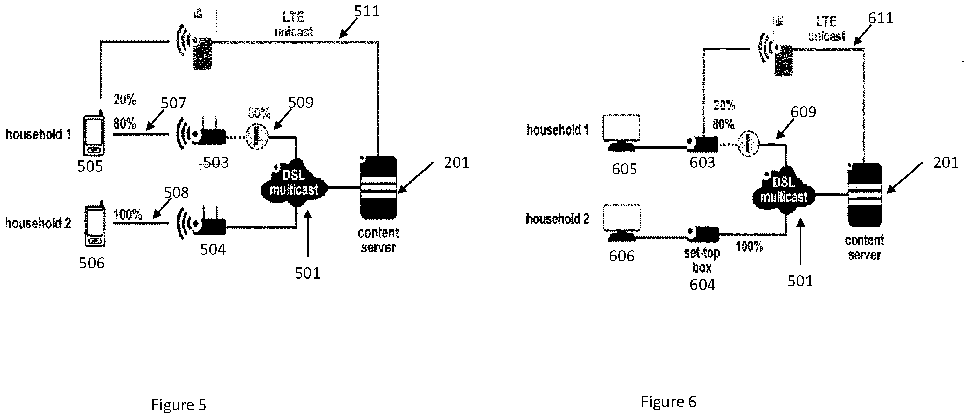

Figures 5 and 6 are schematic representations of content delivery platforms according to examples. The examples of figures 5 and 6 assume that content, such as video content for example, is delivered to an end user or viewer using a wireless LTE network and a wireline DSL network. For example, TV viewers in multiple households can simultaneously watch a live event. According to the examples of figures 5 and 6, the video content is delivered using a combination of multicast and unicast data delivery.

A data communication network in the content delivery platform may be able to host both multicast and unicast data delivery. For the sake of simplicity, the subsequent description assumes that a DSL multicast is complemented by an LTE unicast. The multicast can be equivalently accommodated in the LTE network. Users with poor LTE connectivity who cannot obtain all content data from the LTE segment can use unicast sessions over DSL-backhauled WiFi to avail of the missing content, for example.

Referring to figure 5, a content distributor can multicast a video stream from a content server 201 over a DSL network 501 to set-top boxes 503, 504 in subscriber households. The set-top boxes can also forward the TV content to mobile handsets 505, 506 over wireless links 507, 508. In an example, multicast data can be also forwarded from a residential gateway associated with the DSL line.

In the example of figure 5, the DSL line 509 of household 1 can deliver only 80% of the required TV content, i.e. its data rate is 20% below the pre-defined minimum. Hence, under normal circumstances, household 1 would not be able to watch the live event. The reasons for such a capacity insufficiency can be of temporary nature (e.g., due to a meteorological storm) or permanent (e.g., due to excessive cross-talk). In an example, the missing video content can be delivered over a unicast LTE session 5 11. Accordingly, the missing 20% of content can be provided to the handset 505 using the unicast transport mode 511.

Similarly to figure 5, in figure 6 a content distributor can multicast a video stream from a content server 201 over a DSL network 501 to set-top boxes 603, 604 in subscriber households. The set-top boxes can display content on the displays 605, 606. In an example, multicast data can be also forwarded from a residential gateway associated with the DSL line.

In the example of figure 6, the DSL line 609 of household 1 can deliver only 80% of the required TV content to box 603, i.e. its data rate is 20% below the pre-defined minimum. Hence, under normal circumstances, household 1 would not be able to watch the live event. In an example, the missing video content can be delivered over a unicast LTE session 611. Accordingly, the missing 20% of content can be provided to the box 603 using the unicast transport mode 611.

In an example, an operator may prefer to stream 100% of content over a multicast delivery mode for reasons of efficiency and scalability for example. Users whose DSL connection does not meet minimum multicast requirements can then use on-demand unicastsessions to supplement the missing multicast capacity. In an example, unicast sessions are characterized by linearly independent data with respect to the multicast data as well as among themselves.

However, according to an example, entirely arbitrary combinations of multicast and unicast data delivery modes are possible. The TV operator may split the multiple session into multiple multicast "sub-sessions", each delivering only a fraction of the original content, say 50%, 20%, 20%, 10%. Each such sub-session can be characterized by its own index pool of encoded data (including the two 20% sub-sessions) to ensure global linear independence.

End-users can then subscribe to such multicast sub-sessions whose sum throughput fits within the capabilities of their DSL connection. In the example of figure 6, the user in household 2 with problem-free DSL would therefore subscribe to all said multicast sub-sessions (50% + 20% + 20% + 10% = 100%). However, the user in household 1 would subscribe to multicast sub-sessions totalling at most 80% of the content capacity (eg, 50% + 20% + 10% = 80%). The remaining 20% of the video content would be delivered over one or more unicast (sub)-sessions. For example, to cope with the wireless link variability, two unicast sub-sessions at 10% capacity could be delivered over two independent radio access technologies (e.g., WIFI and LTE). Accordingly, multiple delivery modes hosted by the same communication network can be used in order to deliver content segments. Where needed, another delivery mode hosted on a different communication network can be used to supplement any shortfall.

In an example, in-band unicast re-transmission for missing resources over primarily multicast network may be switched off once unicast sessions over orthogonal network resources (e.g., wireless links) are used to supplement the multicast bandwidth. Consequently, unicast sessions can be dynamically controlled to deliver only the missing portion of multicast data (possibly with some safety margin) to ensure maximum scalability and cost-efficiency of proposed content delivery. By observing unicast session parameters such as throughput, one can also collect statistics about multicast quality of service. Partially delivered segments can still be usable for original content recovery, albeit only for recovering the associated fragment of the source segments.

According to an example, a content server can distribute content at multiple quality levels. For example, basic content quality (e.g., minimal resolution) can be delivered with low throughput demands on the connections (delivery modes). To avail of better content quality, a user can download, in addition to the basic content version, an auxiliary stream carrying information needed the augment the content quality by a pre-definedamount.

Multiple levels of content quality can be delivered to users using multiple auxiliary streams, each delivered independently from other streams by using their own characteristic combination of multicast and unicast for example.

According to an example, user requests for content can be made using standard HTTP. For example, a user can enter a link (e.g., "http://www.examplewebsite.com/news.html") to the requested multimedia content into the address bar of a multimedia application, installed in a smartphone (or set-top box etc.). The application then sends an HTTP REQUEST for the specified server ("www.examplewebsite.com"). In response, the server informs the client application about the available multicast and unicast options for the delivery of the requested content. To this end, the HTTP Alternative Services option can be used as in. The HTTP header can be also use to deliver information on encoding coefficients, e.g. in the form of a seed of a random number generator.

A client application can prioritize multicast data delivery in order to maximize the overall content distribution efficiency. Any missing content can then be supplemented by using client-triggered unicast, server-triggered unicast, or a combination whereby unicast sessions can be controlled based on the performance and configuration of the multicast sessions.

In an example, client-triggered unicast is the unicast delivery of video segments in reaction to an explicit HTTP REQUEST message by the client. Concrete missing non-encoded segments may be requested reactively (e.g., in case a data hole was detected in the video stream). For faster content delivery, encoded segments may be requested proactively (e.g., at the rate similar to the recent multicast "loss" rate).

In an example, server-triggered unicast is the unicast delivery of video segments based on the HTTP/2 PUSH method by the content server. Improving further the above proactive client-triggered unicast, the server can unilaterally engage in proactive delivery of encoded and/or non-encoded segments to the client without waiting for any explicit request by the client. To support this activity, the client can actively terminate the download of expired or redundant content units using standard HTTP/2 RESET signalling to ensure only the transfer of needed/usable units related to current video frames. In this way, overhead is minimized.

For example, having displayed content units S_1 to S_5, a client may expect the download of content units S_10 to S_15 over a multicast session. To this end, according to an example, the client can:
- permit the PUSH of encoded segments E10: 15_i over a unicast session that are generated as random linear combinations of the segments S_10 to S_15, but
- reset (cancel) the download of encoded segments E1:5_i that are generated as random linear combinations of the expired segments S_1 to S_5.

According to an example, the content server and the client can formalize the relationship between the source units S_j and encoded units EX:Y_i by using a naming convention similar to the one in the above example. This will facilitate blind HTTP requests as well as the recovery of source segments from encoded data. The convention can be extended to HLS and MPEG DASH manifest files.

The client application can be implemented to act as an intermediate "HTTP proxy"-like function between the user browser and the content serverthat:
- recovers source segments from the received arbitrary permutated non-encoded and encoded data, and
- forwards them in order to the browser video codec for the actual video content display to the end user.

For example, whenever a non-encoded unit S_i is received, the proxy function can check if all the preceding units with lower indices "i" have been delivered for display. If so, the unit is cached and forwarded for display too. Otherwise, the unit is only cached. Whenever an encoded unit is received, it is cached and the proxy function checks if a new so-far missing video unit can be retrieved by using the cached encoded and non-encoded units. If so, the recovered source unit is cached and, if in order, it is also forwarded. As time progresses, expired, displayed and otherwise unusable units of any type can be removed from the proxy cache.

Examples in the present disclosure can be provided as methods, systems or machine-readable instructions. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

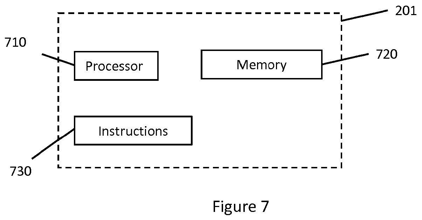

Figure 7 shows an example of a processor 710 associated with a memory 720. The memory 720 comprises computer readable instructions 730 which are executable by the processor 710. In an example, the processor, memory and instructions can be part of the content server 201. The instructions 730 comprise instruction to, at least generate N encoded units formed from respective ones of the K source units of the content segment, where N ≥ K, transmit M encoded units of the content segment using a first data delivery mode of the content delivery platform, where 0 ≤ M ≤ K, and transmit Q encoded units of the content segment using a second data delivery mode of the content delivery platform, where Q ≤ K.

Such machine-readable instructions may also be loaded onto a computeror other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a content delivery platform, for delivering a content segment comprising K source units (205), the method comprising:
generating N encoded units (207) formed from respective ones of the K source units (205) of the content segment;
transmitting M encoded units (207) of the content segment using a first data delivery mode of the content delivery platform; and
transmitting Q encoded units (207)of the content segment using a second data delivery mode of the content delivery platform, wherein the first data delivery mode is a multicast data delivery mode, and wherein the second data delivery mode is a unicast data delivery mode,
**characterised in that** the configuration and performance of the multicast data delivery mode is used to control a link send rate parameter of the unicast data delivery mode.

2. A method as claimed in claim 1, wherein the first and second data delivery modes of the content delivery platform are hosted by at least one data communication network.

3. A method as claimed in claim 1, wherein the first data delivery mode of the content delivery platform is hosted by a first data communication network, and the second data delivery mode of the content delivery platform is hosted by a second data communication network.

4. A method as claimed in any preceding claim, further comprising:
supplementing transmission of the M and/or Q encoded units (207) using the first or second delivery modes with transmission of encoded or source units(207, 205).

5. A method as claimed in any preceding claim, further comprising:
transmitting at least (K-M-Q) source units (205) of the content segment using the first and/or second data delivery mode of the content delivery platform.

6. A method as claimed in any preceding claim, wherein at least a portion of the N encoded units (207) are weighted random linear combinations of the K source units (205) or are generated using any one of repetition; random linear codes; rateless codes; Reed-Solomon codes; parity codes; fountain codes; LPDC codes and Hamming codes.

7. A content server (201) in a content delivery platform, the content server (201) configured to:
generate multiple encoded units (207) using respective source units of a content segment for delivery using the platform;
transmit at least a portion of the multiple encoded units (207) of the content segment using a first data delivery mode of the content delivery platform; and
transmit at least a portion of the multiple encoded units (207) of the content segment using a second data delivery mode of the content delivery platform, wherein the first data delivery mode is a multicast data delivery mode, and wherein the second data delivery mode is a unicast data delivery mode,
**characterised in that** the configuration and performance of the multicast data delivery mode is used to control a link send rate parameter of the unicast data delivery mode.

8. A content server (201) as claimed in claim 7, wherein the first data delivery mode is hosted by a first data communications network.

9. A content server (201) as claimed in claim 7 or 8, wherein the second data delivery mode is hosted by a first or second data communications network.

10. A non-transitory machine-readable storage medium (720) encoded with instructions (730) executable by a processor (710) for delivering content in a content delivery platform, the machine-readable storage medium (720) comprising instructions (730)to:
generate N encoded units formed from respective ones of the K source units of the content segment, where N ≥ K;
transmit M encoded units of the content segment using a first data delivery mode of the content delivery platform; and
transmit Q encoded units of the content segment using a second data delivery mode of the content delivery platform, wherein the first data delivery mode is a multicast data delivery mode, and wherein the second data delivery mode is a unicast data delivery mode,
**characterised in that** the configuration and performance of the multicast data delivery mode is used to control a link send rate parameter of the unicast data delivery mode.

11. A non-transitory machine-readable storage medium (720) as claimed in claim 10, further encoded with instructions (730) to:
transmit M encoded units of the content segment over a first data communication network, where 0 ≤ M ≤ (K + Δ), and Δ > 0, whereby to cover for losses and/or decoding inefficiencies; and
transmit Q encoded units of the content segment over the first or a second data communication network, where Q ≤ (K + Δ).

12. A content delivery system, the system comprising:
means to encode a plurality of source units of a content segment togenerate encoded units for delivery to an end user;
means to transmit at least a portion of the encoded units over a first delivery mode of the system in a first data communication network; and
means to transmit at least a portion of the encoded units over a second delivery mode of the system in the first or a second data communication network, wherein the first data delivery mode is a multicast data delivery mode, and wherein the second data delivery mode is a unicast data delivery mode,
**characterised in that** the configuration and performance of the multicast data delivery mode is used to control a link send rate parameter of the unicast data delivery mode.

13. A content delivery system as claimed in claim 12, wherein the number of encoded units is at least the same as the number of source units.

## Patentansprüche

1. Verfahren in einer Inhaltsbereitstellungsplattform zum Bereitstellen eines Inhaltssegments, das K Quelleinheiten (205) umfasst, wobei das Verfahren Folgendes umfasst:
Erzeugen von N codierten Einheiten (207), die aus jeweiligen der K Quelleinheiten (205) des Inhaltssegments gebildet sind;
Übertragen von M codierten Einheiten (207) des Inhaltssegments unter Verwendung eines ersten Datenbereitstellungsmodus der Inhaltsbereitstellungsplattform; und
Übertragen von Q codierten Einheiten (207) des Inhaltssegments unter Verwendung eines zweiten Datenbereitstellungsmodus der Inhaltsbereitstellungsplattform, wobei der erste Datenbereitstellungsmodus ein Multicastdatenbereitstellungsmodus ist und wobei der zweite Datenbereitstellungsmodus ein Unicastdatenbereitstellungsmodus ist,
**dadurch gekennzeichnet, dass** die Auslegung und die Leistung des Multicastdatenbereitstellungsmodus verwendet wird, um einen Verbindungssenderatenparameter des Unicastdatenbereitstellungsmodus zu steuern.

2. Verfahren nach Anspruch 1, wobei der erste und der zweite Datenbereitstellungsmodus der Inhaltsbereitstellungsplattform von mindestens einem Datenkommunikationsnetzwerk gehostet werden.

3. Verfahren nach Anspruch 1, wobei der erste Datenbereitstellungsmodus der Inhaltsbereitstellungsplattform von einem ersten Datenkommunikationsnetzwerk gehostet wird und der zweite Datenbereitstellungsmodus der Inhaltsbereitstellungsplattform von einem zweiten Datenkommunikationsnetzwerk gehostet wird.

4. Verfahren nach einem der vorhergehenden Ansprüche, das Folgendes umfasst:
Ergänzen einer Übertragung der M und/oder Q codierten Einheiten (207) unter Verwendung des ersten oder des zweiten Bereitstellungsmodus durch eine Übertragung von codierten oder Quelleinheiten (207, 205).

5. Verfahren nach einem der vorhergehenden Ansprüche, das Folgendes umfasst:
Übertragen von mindestens (K-M-Q) Quelleinheiten (205) des Inhaltssegments unter Verwendung des ersten und/oder des zweiten Datenbereitstellungsmodus der Inhaltsbereitstellungsplattform.

6. Verfahren nach einem der vorhergehenden Ansprüche, wobei mindestens ein Abschnitt der N codierten Einheiten (207) gewichtete zufällige Linearkombinationen der K Quelleinheiten (205) sind oder unter Verwendung von einem von Wiederholung; zufälligen linearen Codes; ratenlosen Codes; Reed-Solomon-Codes; Paritätscodes; Fountain-Codes; LPDC-Codes oder Hamming-Codes erzeugt werden.

7. Inhaltsserver (201) in einer Inhaltsbereitstellungsplattform, wobei der Inhaltsserver (201) zu Folgendem ausgelegt ist:
Erzeugen von mehreren codierten Einheiten (207) unter Verwendung von jeweiligen Quelleinheiten eines Inhaltssegments zur Bereitstellung unter Verwendung der Plattform;
Übertragen mindestens eines Abschnitts der mehreren codierten Einheiten (207) des Inhaltssegments unter Verwendung eines ersten Datenbereitstellungsmodus der Inhaltsbereitstellungsplattform; und
Übertragen mindestens eines Abschnitts der mehreren codierten Einheiten (207) des Inhaltssegments unter Verwendung eines zweiten Datenbereitstellungsmodus der Inhaltsbereitstellungsplattform, wobei der erste Datenbereitstellungsmodus ein Multicastdatenbereitstellungsmodus ist und wobei der zweite Datenbereitstellungsmodus ein Unicastdatenbereitstellungsmodus ist,
**dadurch gekennzeichnet, dass** die Auslegung und die Leistung des Multicastdatenbereitstellungsmodus verwendet wird, um einen Verbindungssenderatenparameter des Unicastdatenbereitstellungsmodus zu steuern.

8. Inhaltsserver (201) nach Anspruch 7, wobei der erste Datenbereitstellungsmodus von einem ersten Datenkommunikationsnetzwerk gehostet wird.

9. Inhaltsserver (201) nach Anspruch 7 oder 8, wobei der zweite Datenbereitstellungsmodus von einem ersten oder einem zweiten Datenkommunikationsnetzwerk gehostet wird.

10. Nichttransitorisches maschinenlesbares Speichermedium (720), auf dem Anweisungen (730) codiert sind, die zum Bereitstellen eines Inhalts in einer Inhaltsbereitstellungsplattform von einem Prozessor (710) ausführbar sind, wobei das maschinenlesbare Speichermedium (720) Anweisungen (730) für Folgendes umfasst:
Erzeugen von N codierten Einheiten, die aus jeweiligen der K Quelleinheiten des Inhaltssegments gebildet sind, wo N ≥ K;
Übertragen von M codierten Einheiten des Inhaltssegments unter Verwendung eines ersten Datenbereitstellungsmodus der Inhaltsbereitstellungsplattform; und
Übertragen von Q codierten Einheiten des Inhaltssegments unter Verwendung eines zweiten Datenbereitstellungsmodus der Inhaltsbereitstellungsplattform, wobei der erste Datenbereitstellungsmodus ein Multicastdatenbereitstellungsmodus ist und wobei der zweite Datenbereitstellungsmodus ein Unicastdatenbereitstellungsmodus ist,
**dadurch gekennzeichnet, dass** die Auslegung und die Leistung des Multicastdatenbereitstellungsmodus verwendet wird, um einen Verbindungssenderatenparameter des Unicastdatenbereitstellungsmodus zu steuern.

11. Nichttransitorisches maschinenlesbares Speichermedium (720) nach Anspruch 10, auf dem ferner Anweisungen (730) für Folgendes codiert sind:
Übertragen von M codierten Einheiten des Inhaltssegments über ein erstes Datenkommunikationsnetzwerk, wo 0 ≤ M ≤ (K + Δ) und Δ > 0, wodurch Verluste und/oder Decodierineffizienzen abgedeckt werden; und
Übertragen von Q codierten Einheiten des Inhaltssegments über das erste oder ein zweites Datenkommunikationsnetzwerk, wo Q ≤ (K + Δ).

12. Inhaltsbereitstellungssystem, wobei das System Folgendes umfasst:
Mittel zum Codieren einer Vielzahl von Quelleinheiten eines Inhaltssegments, um codierte Einheiten für eine Bereitstellung für einen Endbenutzer zu erzeugen;
Mittel zum Übertragen mindestens eines Abschnitts der codierten Einheiten über einen ersten Bereitstellungsmodus des Systems in einem ersten Datenkommunikationsnetzwerk; und
Mittel zum Übertragen mindestens eines Abschnitts der codierten Einheiten über einen zweiten Bereitstellungsmodus des Systems im ersten oder einem zweiten Datenkommunikationsnetzwerk, wobei der erste Datenbereitstellungsmodus ein Multicastdatenbereitstellungsmodus ist und wobei der zweite Datenbereitstellungsmodus ein Unicastdatenbereitstellungsmodus ist,
**dadurch gekennzeichnet, dass** die Auslegung und die Leistung des Multicastdatenbereitstellungsmodus verwendet wird, um einen Verbindungssenderatenparameter des Unicastdatenbereitstellungsmodus zu steuern.

13. Inhaltsbereitstellungssystem nach Anspruch 12, wobei die Anzahl von codierten Einheiten mindestens dieselbe ist wie die Anzahl von Quelleinheiten.

## Revendications

1. Procédé pour distribuer, dans une plateforme de distribution de contenu, un segment de contenu comprenant K unités sources (205), le procédé comprenant :
la génération de N unités codées (207) formées à partir d'unités respectives des K unités sources (205) du segment de contenu ;
la transmission de M unités codées (207) du segment de contenu à l'aide d'un premier mode de distribution de données de la plateforme de distribution de contenu ; et
la transmission de Q unités codées (207) du segment de contenu à l'aide d'un deuxième mode de distribution de données de la plateforme de distribution de contenu, dans lequel le premier mode de distribution de données est un mode de distribution de données multidiffusion, et dans lequel le deuxième mode de distribution de données est un mode de distribution de données monodiffusion,
**caractérisé en ce que** la configuration et la performance du mode de distribution de données multidiffusion sont utilisées pour commander un paramètre de débit d'envoi de liaison du mode de distribution de données monodiffusion.

2. Procédé selon la revendication 1, dans lequel les premier et deuxième modes de distribution de données de la plateforme de distribution de contenu sont hébergés par au moins un réseau de communication de données.

3. Procédé selon la revendication 1, dans lequel le premier mode de distribution de données de la plateforme de distribution de contenu est hébergé par un premier réseau de communication de données, et le deuxième mode de distribution de données de la plateforme de distribution de contenu est hébergés par un deuxième réseau de communication de données.

4. Procédé selon l'une quelconque des revendications précédentes, comprenant en outre :
la transmission complétée des M et/ou Q unités codées (207) à l'aide du premier ou du deuxième mode de distribution en transmettant des unités codées ou des unités sources (207, 205).

5. Procédé selon l'une quelconque des revendications précédentes, comprenant en outre :
la transmission d'au moins (K-M-Q) unités sources (205) du segment de contenu à l'aide du premier et/ou du deuxième mode de distribution de données de la plateforme de distribution de contenu.

6. Procédé selon l'une quelconque des revendications précédentes, dans lequel au moins une partie des N unités codées (207) sont des combinaisons linéaires aléatoires pondérées des K unités sources (205) ou sont générées à l'aide de l'un quelconque parmi une répétition ; des codes linéaires aléatoires ; des codes sans débit ; des codes de Reed-Solomon ; des codes de parité, des codes de fontaine, des codes LPDC et des codes de Hamming.

7. Serveur de contenu (201) dans une plateforme de distribution de contenu, le serveur de contenu (201) étant configuré pour :
générer de multiples unités codées (207) à l'aide d'unités sources respectives d'un segment de contenu pour la distribution à l'aide de la plateforme ;
transmettre au moins une partie des multiples unités codées (207) du segment de contenu à l'aide d'un premier mode de distribution de données de la plateforme de distribution de contenu ; et
transmettre au moins une partie des multiples unités codées (207) du segment de contenu à l'aide d'un deuxième mode de distribution de données de la plateforme de distribution de contenu, dans lequel le premier mode de distribution de données est un mode de distribution de données multidiffusion, et dans lequel le deuxième mode de distribution de données est un mode de distribution de données monodiffusion,
**caractérisé en ce que** la configuration et la performance du mode de distribution de données multidiffusion sont utilisées pour commander un paramètre de débit d'envoi de liaison du mode de distribution de données monodiffusion.

8. Serveur de contenu (201) selon la revendication 7, dans lequel le premier mode de distribution de données est hébergé par un premier réseau de communication de données.

9. Serveur de contenu (201) selon la revendication 7 ou 8, dans lequel le deuxième mode de distribution de données est hébergé par un premier ou un deuxième réseau de communication de données.

10. Support de stockage non transitoire lisible par machine (720) codé avec des instructions (730) exécutables par un processeur (710) pour distribuer un contenu dans une plateforme de distribution de contenu, le support de stockage lisible par machine (720) comprenant des instructions (730) pour :
générer N unités codées formées à partir d'unités respectives des K unités sources du segment de contenu, où N ≥ K ;
transmettre M unités codées du segment de contenu à l'aide d'un premier mode de distribution de données de la plateforme de distribution de contenu ; et
transmettre Q unités codées du segment de contenu à l'aide d'un deuxième mode de distribution de données de la plateforme de distribution de contenu, dans lequel le premier mode de distribution de données est un mode de distribution de données multidiffusion, et dans lequel le deuxième mode de distribution de données est un mode de distribution de données monodiffusion,
**caractérisé en ce que** la configuration et la performance du mode de distribution de données multidiffusion sont utilisées pour commander un paramètre de débit d'envoi de liaison du mode de distribution de données monodiffusion.

11. Support de stockage non transitoire lisible par machine (720) selon la revendication 10, codé en outre avec des instructions (730) pour :
transmettre M unités codées du segment de contenu sur un premier réseau de communication de données, où 0 ≤ M ≤ (K + Δ), et Δ > 0, afin de couvrir les pertes et/ou les inefficacités de décodage ; et
transmettre Q unités codées du segment de contenu sur le premier réseau de communication de données ou un deuxième réseau de communication de données, où Q ≤ (K + Δ).

12. Système de distribution de contenu, le système comprenant :
des moyens pour coder une pluralité d'unités sources d'un segment de contenu pour générer des unités codées pour la distribution à un utilisateur final ;
des moyens pour transmettre au moins une partie des unités codées sur un premier mode de distribution du système dans un premier réseau de communication de données ; et
des moyens pour transmettre au moins une partie des unités codées sur un deuxième mode de distribution du système dans le premier réseau de communication de données ou un deuxième réseau de communication de données, dans lequel le premier mode de distribution de données est un mode de distribution de données multidiffusion, et dans lequel le deuxième mode de distribution de données est un mode de distribution de données monodiffusion,
**caractérisé en ce que** la configuration et la performance du mode de distribution de données multidiffusion sont utilisées pour commander un paramètre de débit d'envoi de liaison du mode de distribution de données monodiffusion.

13. Système de distribution de contenu selon la revendication 12, dans lequel le nombre d'unités codées est au moins égal au nombre d'unités sources.
